Europäisches Patentamt

European Patent Office

Office européen des brevets

(11) Veröffentlichungsnummer : **0 014 742**
**B1**

# EUROPÄISCHE PATENTSCHRIFT

(45) Veröffentlichungstag der Patentschrift :
01.09.82

(51) Int. Cl.³ : **B 60 K   5/12, F 16 F   9/10**

(21) Anmeldenummer : **79104545.3**

(22) Anmeldetag : **16.11.79**

(54) **Hydraulisch dämpfendes Einkammerlager.**

(30) Priorität : **19.02.79 DE 2906282**

(43) Veröffentlichungstag der Anmeldung :
**03.09.80 (Patentblatt 80/18)**

(45) Bekanntmachung des Hinweises auf die Patenterteilung : **01.09.82 Patentblatt 82/35**

(84) Benannte Vertragsstaaten :
**BE FR GB IT NL SE**

(56) Entgegenhaltungen :
**DE A 2 040 968**
**DE A 2 616 258**
**DE A 2 621 725**
**DE A 2 639 452**
**DE A 2 652 501**
**DE A 2 736 188**
**FR A 2 357 790**
**FR A 2 375 501**
**GB A 811 748**
**US A 2 380 899**

(73) Patentinhaber : **Boge GmbH**
**Bogestrasse 50**
**D-5208 Eitorf/Sieg (DE)**

(72) Erfinder : **Hamaekers, Arno, Dipl.-Ing.**
**Brunhildstrasse 27**
**D-6944 Hemsbach (DE)**

EP 0 014 742 B1

Imprimerie Jouve, 18, rue St-Denis, 75001 Paris, France

## Hydraulisch dämpfendes Einkammerlager

Die Erfindung betrifft ein hydraulisch dämpfendes Einkammerlager, insbesondere Motorlager für Kraftfahrzeuge, dessen mit Dämpfungsflüssigkeit gefüllte Kammer aus einer oberen, an eine metallische Gehäusewandung angeschlossenen, und einer unteren Stirnwand sowie einer zwischen diesen sich erstreckenden, gummielastischen Umfangswand gebildet ist, wobei ein über eine Drosselstelle in der unteren Stirnwand hydraulisch mit der Kammer verbundener, separater Ausgleichsraum vorgesehen ist, der als gummielastischer Blähkörper ausgebildet ist.

Ein derartiges Einkammerlager ist in der GB-A-811 748 beschrieben. Dessen mit Dämpfungsflüssigkeit gefüllte Kammer wird von einer oberen und einer unteren Stirnwand sowie von einer kegelförmigen gummielastischen Umfangswand als Federelement gebildet. Die obere Stirnwand dient der Krafteinleitung, während für die Kraftaufnahme in den unteren Bereich der Umfangswand ein Ringsteg als Widerlager einvulkansiert ist, das nur über eine Gummizwischenschicht mit der unteren Stirnwand verbunden ist. Diese weist in ihrem Mittenbereich ein gummielastisches Membransegment auf, in dem mittig ein Durchtrittsloch als Drosselstelle vorgesehen ist. Dieses Durchtrittsloch verbindet die Kammer mit einem sich nach unten an die untere Stirnwand anschließenden Ausgleichsraum, dessen Wandung im wesentlichen von einem gummielastischem Faltenbalg gebildet wird.

Nachteilig bei diesem Lager ist zunächst die relativ große Bauhöhe, bedingt durch die Anordnung von Kammer und Ausgleichsraum untereinander. Diese Anordnung bedingt aber auch funktionelle Nachteile. So bewirkt die mit zunehmender Einfederung größer werdende Flüssigkeitsmenge im Ausgleichsraum, daß auf die Kammer eine Saugwirkung ausgeübt wird, die das Dämpfungsverhalten ungünstig beeinflußt. Außerdem können durch die hängende Anordnung des Balges unkontrollierte Schwingungen auftreten, die sich ebenfalls negativ auswirken können.

Weiterhin von Nachteil ist die teilweise elastische Ausbildung der unteren Stirnwand durch das Membransegment mit dem darin angeordneten Durchtrittsloch. Dies hat zwar zur Folge, daß hochfrequente Schwingungen mit niedriger Amplitude durch Nachgeben des Membransegmentes aufgefangen werden, so daß eine Geräuschentwicklung in diesem Schwingungsbereich vermieden wird. Dieses Nachgeben tritt aber zwangsläufig auch bei niedrigfrequenten Schwingungen mit großer Amplitude auf, zumal es in keiner Weise definiert ist. Hierdurch verschlechtert sich die Dämpfwirkung in diesem Schwingungsbereich relativ stark. Die Kombination von guter Dämpfungswirkung bei niedrigfrequenten Schwingungen und Vermeidung von Geräuschentwicklung bei hochfrequenten Schwingungen ist hier demnach nicht gelungen.

Bei einem in der DE-A-2 621 725 beschrieben Zweikammerlager ist versucht wirden, dieses Problem durch in beiden Kammern an den Stirnwänden vorgesehene, pneumatische Puffer in Form von jeweils einen gasgefüllten Raum einschließenden Membranen zu lösen. Die Übertragung dieser Lösung auf ein Einkammerlager würde jedoch wegen der nur einseitigen Anschlagmöglichkeit zu einem asymmetrischen Dämpfverhalten führen. Zudem tritt mit der Zeit eine Gaspermeation durch die dünnwandige Membran auf, die zu einer Entleerung des Puffers und damit zur Aufhebung der nachgebenden Wirkung des Puffers führt. Bei hochfrequenten Schwingungen werden deshalb starke Geräusche auftreten.

Der Erfindung liegt die Aufgabe zugrunde, ein Einkammerlager der eingangs genannten Art so auszubilden, daß es bei möglichst kompakter Ausbildung ein über lange Zeit gleichbleibendes, optimales Dämpfverhalten mit guter Dämpfwirkung bei niedrigfrequenten Schwingungen und geringer bis keiner Dämpfwirkung bei hochfrequenten Schwingungen aufweist.

Diese Aufgabe wird erfindungsgemäß dadurch gelöst, daß die obere Stirnwand mit axialem, definiertem Spiel oszillierbar gelagert ist und daß der gummielastische Blähkörper die gummielastische Umfangswand zur drucklosen Aufnahme von Dämpfungsflüssigkeit aus der Kammer in den Ausgleichsraum umschließt.

Aufgrund der mit definiertem Spiel oszillierend gelagerten Stirnwand ist eine in beiden Richtungen exakt begrenzte Nachgiebigkeit gegeben, die eine definierte Volumenvergrößerung bei hochfrequenten Schwingungen ermöglicht und damit eine Dämpfung in diesem Schwingungsbereich verhindert. Da bei dem Oszillieren auch keine komprimierarbeit geleistet werden muß, wird hierdurch das Federverhalten der gummielastischen Umfangswand nicht beeinträchtigt. Bei niedrigfrequenten Schwingungen hoher Amplitude wird die so gelagerte Stirnwand sofort gegen eine der Anschläge gestoßen, da nicht wie im Stande der Technik komprimiert werden muß, so daß die volle Dämpfwirkung praktisch sofort zur Verfügung steht. Das Dämpfverhalten wird dabei exakt durch die Druchtrittsöffnung in der unteren Stirnwand bestimmt. Die praktisch parallele Anordnung von Kammer und Ausgleichraum bewirkt zudem eine außerordentlich kompakte Ausbildung des Lagers, wobei Kammer und Ausgleichsraum nach dem Prinzip der kommunizierenden Röhren eine drucklose Aufnahme der Dämpfungsflüssigkeit aus der Kammer in den Ausgleichsraum zulassen. Dabei hat der Ausgleichsraum aufgrund seiner Lage keinen Einfluß auf die Dämpffunktion. Insgesamt ist damit ein Lager gefunden, das bei optimal einstellbaren Dämpf- und Federfunktionen einen sehr geringen Raumbedarf hat.

In Ausbildung der Erfindung ist vorgesehen, daß die gummielastische Umfangswand der Kammer als kegelstumpfförmiger Gummihohlkörper mit kegeligen Anbindungsflächen ausgebildet ist, so daß der Ausgleichsraum im wesentlichen unterhalb der Kammer im vorhandenen Einbauraum der Kammer untergebracht ist.

Gemäß einer besonders bevorzugten Ausführungsform der Erfindung weist die obere Stirnwand an ihrem äußeren Umfang eine zwischen zwei fest angeordneten Blechprofilen einspannbare Verdickung und eine mittige Metallarmierung auf, deren äußerer Rand von der Verdickung beabstandet ist derart, daß sich zwischen Verdickung und Bereich der Metallarmierung der oberen Stirnwand ein elastischer Ringbereich ergibt, wobei im Bereich der Metallarmierung beidseitig in definierten Abständen von der oberen Stirnwand je ein fester Anschlag an den Blechprofilen vorgesehen ist.

Vorzugsweise ist die gummielastische Umfangswand des Ausgleichsraums balgartig mit einer Mehrzahl von unter Druck ausstülpbaren Falten geformt. Hierdurch wird erreicht, daß ein nennenswerter Widerstand gegen das erwünschte Aufblähen der Ausgleichskammer im Sinne ihrer Funktion als Auffangraum für die Dämpfungsflüssigkeit nicht aufgebaut wird. Der Ausgleichsraum kann zur Verringerung der Baugröße des Lagers unterhalb der Kammer im vorhandenen Einbauraum der Kammer untergebracht werden.

Gemäß einer zweckmäßigen Ausgestaltung der Erfindung ist vorgeschlagen, die hydraulisch wirksame Fläche der oberen Stirnwand merklich größer als die Fläche der unteren Stirnwand zu wählen. Die Großflächigkeit der Stirnwand erleichtert die Aufnahme hochfrequenter Schwingungen mit kleinen Amplituden, ohne daß Bewegungen der Dämpfungsflüssigkeit in diesem Belastungszustand des Lagers ausgelöst werden. Aufgrund der Isolation der hochfrequenten Schwingungen ist eine Geräuschübertragung beispielsweise vom Motor eines Kraftfahrzeugs auf Fahrwerk und Fahrgastraum besonders gut gedämpft.

Die obere Stirnwand kann als Gummi-Metallteil ausgebildet und umfangsseitig zwischen zwei Ringflanschen des Widerlagers dicht gehalten sein. Dabei kann der äußere Ringflansch zu einem Deckel für das Lager erweitert sein, der dann eine Schutzfunktion erfüllt. Hierbei kann der Deckel gleichzeitig für eine zentrale Aufnahme der Lagerlast ausgebildet sein. Bei dieser Ausführungsform ist es von Vorteil, die Ringflansche als Blechprofile auszubilden, die in einer Ausnehmung des Widerlagers gehalten sind. Infolge dieses Gesamtaufbaus ergibt sich die Möglichkeit einer besonders einfachen Befestigung des erfindungsgemäßen Lagers.

Insgesamt ergibt sich neben den erwähnten Vorteilen als Vorzug des erfindungsgemäßen Lagers, daß dieses Notlaufeigenschaften bei einem Verlust der Dämpfungsflüssigkeit hat, da die Federwirkung des Lagers aufrechterhalten bleibt.

Das Lager zeichnet sich durch eine kompakte Bauweise bei einfacher Bauart und Herstellung durch günstige Entformbarkeit der Gummi-Metallteile aus. Aufgrund der geringen Anzahl der Teile ist eine preisgünstige Herstellung möglich, ohne daß die gewünschten Federungs-, Dämpfungs- und Geräuschisolierungseigenschaften beeinträchtigt werden. Die Funktionen des Lagers bleiben darüber hinaus bei sämtlichen üblicherweise auftretenden Einbau- und Belastungsverhältnissen erhalten.

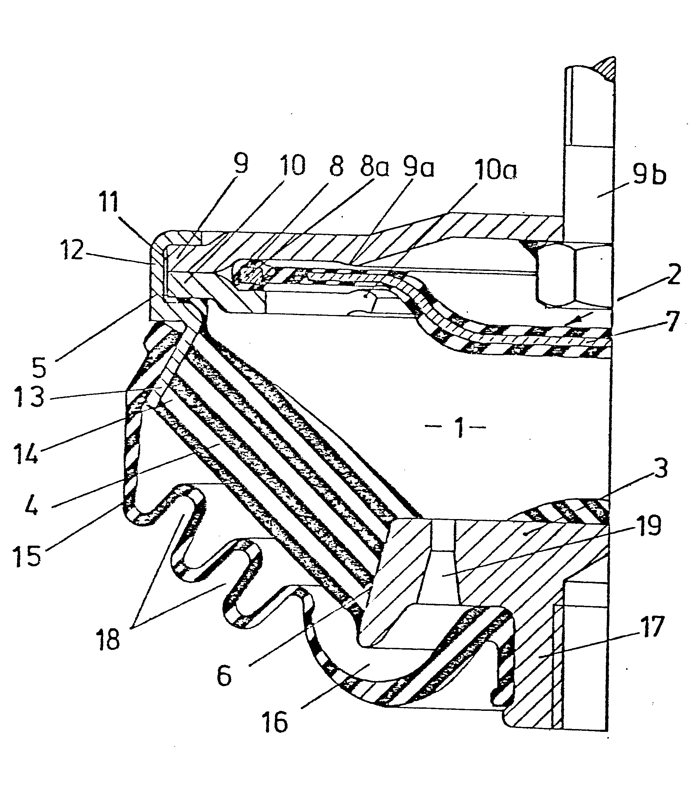

Weitere Einzelheiten, Merkmale und Vorteile des Gegenstandes der Erfindung ergeben sich aus der nachfolgenden Beschreibung der zugehörigen Zeichnung, in deren einziger Figur schematisch ein erfindungsgemäßes Einkammer-Motorlager im Schnitt dargestellt ist. Seine mit Dämpfungsflüssigkeit gefüllte Kammer 1 ist gebildet aus einer oberen Stirnwand 2, einer unteren Stirnwand 3 und einer gummielastischen Umfangswand 4, welche sich zwischen einem metallischen Widerlager 5 und einer kegeligen Anbindungsfläche 6 der unteren Stirnwand 3 erstreckt.

Die obere Stirnwand 2 besteht aus einem flachen, membranartigen Gummiteil, welches eine topfförmige Gestalt und Festigkeit durch eine mittige Metallarmierung 7 erhält. Diese erstreckt sich nicht bis in den Randbereich hinein, so daß ein elastischer Ringbereich zwischen nachfolgend beschriebenen fest eingespannten Blechprofilen 9, 10 verbleibt, welcher eine Oszillierbarkeit der oberen Stirnwand 2 in axialer Richtung in definiertem Speil gewährleistet. Hierzu weisen die Blechprofile 9, 10 im Bereich der Metallarmierung 7 der oberen Stirnwand 2 jeweils Anschläge 9a bzw. 10a auf.

Die obere Stirnwand 2 ist an ihrem äußeren Umfang verdickt ausgebildet. Diese Verdickung 8, innerhalb welcher vorteilhaft ein metallischer Armierungsring 8a angeordnet ist, ist zwischen zwei divergierend geformten Blechprofilen 9, 10 fest eingespannt, welche wiederum in einer Ausnehmung 11 eines oberen Flansches 12 des Widerlagers 5 gehalten sind. Das Blechprofil 10 erstreckt sich nur geringfügig in die Kammer 1 hinein und erfüllt eine reine Haltefunktion. Das Blechprofil 9 dagegen ist zu einem Deckel für das Lager erweitert, welcher zur zentralen Aufnahme der Motorlast mit einem Stehbolzen 9b versehen ist.

Das Widerlager 5 weist einen unteren Ringflansch 13, der kegelstumpfförmig ist und eine zur Anbindungsfläche 6 korrespondierende kegelförmige Anbindungsfläche 14 für die gummielastische Umfangswand 4 am Widerlager 5 bildet, auf.

Die äußere freie Fläche des Flansches 13 wird zur Befestigung des einen freien Endes einer gummielastischen Umfangswand 15 eines Ausgleichsraums 16 ausgenutzt. Dieser ist unterhalb der Kammer 1 im vorhandenen Bauraum der Kammer untergebracht. Hierzu ist die untere Stirnwand 3 mit einem zylindrischen Ansatz 17 versehen, an dem das andere Ende der gummielastischen Umfangswand befestigt ist. Der zylindrische Ansatz 17 ist mit einem zentralen Innengewinde versehen, in das ein nicht dargestellter Befestigungsbolzen einschraubbar ist.

Infolge des beschriebenen Aufbaus ermöglicht das erfindungsgemäße Motorlager eine im Vergleich zu den bekannten hydraulisch dämpfenden Motorlagern sehr einfache und platzsparende Befestigung mittels nur zweier Befestigungsschrauben.

Die gummielastische Umfangswand 15 weist eine Mehrzahl von unter Druck ausstülpbaren Falten 18 auf, welche einem Blähvorgang keinen nennenswerten Widerstand entgegensetzen, so daß der Ausgleichsraum die Funktion eines reinen Auffangraums für die hydraulische Dämpfungsflüssigkeit besitzt, welche durch eine in der unteren Stirnwand 3 ausgebildete Drosselstelle 19 aus der Kammer 1 verdrängbar ist.

**Ansprüche**

1. Hydraulisch dämpfendes Einkammerlager, insbesondere Motorlager für Kraftfahrzeuge, dessen mit Dämpfungsflüssigkeit gefüllte Kammer (1) aus einer oberen (2), an eine metallische Gehäusewandung (5) angeschlossenen, und einer unteren Stirnwand (3) sowie einer sich zwischen diesen erstreckenden, gummielastischen Umfangswand (4) gebildet ist, wobei ein über eine Drosselstelle (19) in der unteren Stirnwand (3) hydraulisch mit der Kammer (1) verbundener, separater Ausgleichsraum (16) vorgesehen ist, der als gummielastischer Blähkörper (15) ausgebildet ist, dadurch gekennzeichnet, daß die obere Stirnwand (2) mit axialem, definiertem Spiel oszillierbar gelagert ist und daß der gummielastische Blähkörper (15) die gummielastische Umfangswand (4) zur drucklosen Aufnahme von Dämpfungsflüssigkeit aus der Kammer (1) in den Ausgleichsraum (16) umschließt.

2. Einkammerlager nach Anspruch 1, dadurch gekennzeichnet, daß die gummielastische Umfangswand (4) der Kammer (1) als kegelstumpfförmiger Gummihohlkörper mit kegeligen Anbindungsflächen (6, 14) ausgebildet ist, so daß der Ausgleichsraum (16) im wesentlichen unterhalb der Kammer (1) im vorhandenen Einbauraum der Kammer (1) untergebracht ist.

3. Einkammerlager nach eine der Ansprüche 1 oder 2, dadurch gekennzeichnet, daß die hydraulisch wirksame Fläche der oberen Stirnwand (2) merklich größer als die Fläche der unteren Stirnwand (3) ist.

4. Einkammerlager nach einem der Ansprüche 1 bis 3, dadurch gekennzeichnet, daß die obere Stirnwand (2) als Gummi-Metallteil ausgebildet und umfangsseitig zwischen zwei Ringflanschen (9, 10) des Widerlagers (5) dicht gehalten ist.

5. Einkammerlager nach Anspruch 4, dadurch gekennzeichnet, daß die obere Stirnwand (2) an ihrem äußeren Umfang eine zwischen den Blechprofilen (9, 10) einspannbare Verdickung (8) und eine mittige Metallarmierung (7) aufweist, deren äußerer Rand von der Verdickung (8) beabstandet ist derar, daß sich zwischen Verdickung (8) und Bereich der Metallarmierung (7) der oberen Stirnwand (2) ein elastischer Ringbereich ergibt, und daß im Bereich der Metallarmierung (7) beidseitig in definierten Abständen von der oberen Stirwand (2) je ein fester Anschlag (9a, 10a) an den Blechprofilen vorgesehen ist.

6. Einkammerlager nach Anspruch 4 oder 5, dadurch gekennzeichnet, daß der äußere Ringflansch (9) zu einem Dekkel für das Lager erweitert ist, wobei der Deckel für eine zentrale Aufnahme der Lagerlast ausgebildet ist.

7. Einkamherlager anch einem der Ansprüche 4 bis 6, dadurch gekennzeichnet, daß die Ringflansche (9, 10) Blechprofile sind, die in einer Ausnehmung (11) des Widerlagers (5) gehalten sind.

**Claims**

1. Hydraulically damping single-chamber mounting, especially an engine mounting for motor vehicles, of which the chamber (1) filled with damping fluid is formed from an upper wall (2) connected to a metallic housing (5) and a lower wall (3), and a resilient peripheral wall (4) extending between them, there being provided a separate compensating space (16) connected hydraulically through a restriction (19) in the lower wall (3) to the chamber (1), this compensating space being in the form of an elastically expandable bag (15), characterised in that, the upper wall (2) is mounted to be able to oscillate with predetermined axial play and that the elastic expandable bag (15) surrounds the resilient peripheral wall (4) to receive damping fluid from the chamber (1) at zero pressure into the compensating space (16).

2. Single-chamber mounting to claim 1, characterised in that, the resilient peripheral wall (4) of the chamber (1) is formed as a frustoconical hollow rubber body with conical engaging surfaces (6, 14) so that the compensating space (16) is mounted substantially below the chamber (1) within the constructional space available for the chamber (1).

3. Single-chamber mounting according to one of claims 1 or 2, characterised in that, the hydraulically effective surface area of the upper wall (2) is signicantly greater than the surface area of the lower wall (3).

4. Single-chamber mounting according to one of claims 1 to 3, characterised in that, the upper wall (2) is in the form of a rubber-metal component and its periphery is tightly clamped between two annular flanges (9, 10) of the housing (5).

5. Single-chamber mounting according to claim 4, characterised in that, the upper wall (2) has at its outer periphery a thickened portion (8) which can be clamped between the sheet metal shaped members (9, 10) and an intermediate metal reinforcement (7) of which the outer periphery is spaced away from the thickened portion (8) in such a way that an elastic annular region results between the thickened portion (8) and the region of the metal reinforcement (7) of the upper wall (2) and that in the region of the metal reinforcement (7), on each side and at a predetermined spacing from the upper wall (2) there is a respective fixed stop (9a, 10a) on the sheet metal shaped members.

6. Single-chamber mounting according to claim 4 or 5, characterised in that, the outer annular flange (9) is extended to form a cover for the mounting, the cover being designed to receive the bearing load centrally.

7. Single-chamber mounting according to one of claims 4 to 6, characterised in that, the annular flanges (9, 10) are sheet metal shaped members retained in a recess (11) in the housing (5).

**Revendications**

1. Support à une chambre, à amortissement hydraulique, notamment support de moteur pour véhicules automobiles, dont la chambre (1), remplie de liquide d'amortissement, est formée par une paroi frontale supérieure (2) raccordée à une paroi de carter métallique (5) et une paroi frontale inférieure (3) ainsi que par une paroi de pourtour (4) d'une élasticité de caoutchouc s'étendant entre ces parois (2, 3), un compartiment de compensation séparé (16) étant prévu et relié hydrauliquement à la chambre (1) par l'intermédiaire d'un point d'étranglement (19) ménagé dans la paroi frontale inférieure (3) compartiment de compensation qui est formé par un élément de gonflement (15), d'une élasticité de caoutchouc, caractérisé en ce que la. paroi frontale supérieure (2) est montée de façon à pouvoir osciller avec un jeu axial déterminé et en ce que l'élément de gonflement (15), d'une élasticité de caoutchouc, entoure la paroi de pourtour (4), d'une élasticité de caoutchouc, en vue de recevoir sans pression du liquide d'amortissement venant de la chambre (1) dans le compartiment de compensation (16).

2. Support à une chambre selon la revendication 1, caractérisé en ce que la paroi de pourtour (4), d'une élasticité de caoutchouc, de la chambre (1) est constituée sous forme d'un corps creux de caoutchouc de forme tronconique avec des surfaces de liaison coniques (6, 14), de telle sorte que le compartiment de compensation (16) se trouve ménagé essentiellement au-dessous de la chambre (1) dans l'espace de construction existant pour la chambre (1).

3. Support à une chambre selon l'une des revendications 1 ou 2, caractérisé en ce que la surface agissant par voie hydraulique de la paroi frontale supérieure (2) est notablement plus grande que la surface de la paroi frontale inférieure (3).

4. Support à une chambre selon l'une des revendications 1 à 3, caractérisé en ce que la paroi frontale supérieure (2) est constituée sous forme d'élément de caoutchouc-métal et est maintenue étroitement enserrée, du côté de son pourtour, entre deux brides annulaires (9, 10) de l'élément de butée (5).

5. Support à une chambre selon la revendication 4, caractérisé en ce que la paroi frontale supérieure (2) comporte sur son pourtour extérieur un épaississement (8) s'insérant entre les profilés de tôle (9, 10) et une armature métallique médiane (7), dont le bord extérieur est écarté de l'épaississement (8), de telle manière qu'il en résulte, entre l'épaississement (8) et la zone de l'armature métallique (7) de la paroi frontale supérieure (2), une zone annulaire élastique, et en ce que, dans la zone de l'armature métallique (7), de chaque côté, à une distance déterminée de la paroi frontale supérieure (2), est prévue une butée fixe (9a, 10a) sur les profilés de tôle.

6. Support à une chambre selon la revendication 4 ou 5, caractérisé en ce que la bride annulaire extérieure (9) est étendue jusqu'à former un couvercle pour le support, ce couvercle étant agencé pour recevoir au centre la charge que subit le support.

7. Support à une chambre selon l'une des revendications 4 à 6, caractérisé en ce que les brides annulaires (9, 10) sont des profilés de tôle, qui sont maintenus dans un évidement (11) de l'élément de butée (5).